# EUROPEAN PATENT APPLICATION

(11) **EP 4 588 950 A1**
(43) Date of publication of application: **23.07.2025**
(21) Application number: 23865857.9
(22) Date of filing: 14.09.2023
(51) Int. Cl.: C08G 18/32, C08K 3/04, C08K 3/22, C08K 3/02, C08K 3/26, C08J 9/12, C08J 9/14

(54) **COMPOSITION FOR FORMING ECO-FRIENDLY POLYURETHANE FOAM HAVING IMPROVED INSULATION PROPERTIES AND METHOD FOR PREPARING POLYURETHANE FOAM**

(30) Priority: 15.09.2022 KR 20220116699
(71) Applicant: Samyang Corporation, Jongno-gu Seoul 03129 (KR)
(72) Inventor: SONG, Gwang Seok, Jeonju-si, Jeollabuk-do 55021 (KR); NOH, Jae Guk, Sejong 30141 (KR); YOO, Seung Hyun, Daejeon 34073 (KR); IM, Jun Seop, Hwaseong-si, Gyeonggi-do 18496 (KR); SHIN, Se Ra, Iksan-si, Jeollabuk-do 54558 (KR); LEE, Dai Soo, Seoul 06715 (KR)
(74) Representative: Gleiss Große Schrell und Partner mbB
(86) International application number: PCT/KR2023/013782
(87) International publication number: WO 2024/058561

(57) **Abstract**

The present invention relates to a composition for forming an eco-friendly polyurethane foam having improved insulation properties and a method for preparing a polyurethane foam. More specifically, the present invention relates to: a composition for forming a two-component type polyurethane foam; a method for preparing a polyurethane foam by using same; and an eco-friendly polyurethane foam prepared thereby, the composition being capable of forming an eco-friendly polyurethane foam having simultaneously improved insulation properties and general properties, including a foamed state of the foam, by including a polyol premix composition including, within a specific amount range, anhydrosugar alcohol, especially isosorbide, derived from natural sources.

## Description

### TECHNICAL FIELD

The present invention relates to a composition for forming eco-friendly polyurethane foam with improved heat insulation properties and a method for preparing the polyurethane foam, etc., and more specifically, a two-component type composition for forming polyurethane foam which comprises a polyol premix composition comprising anhydrosugar alcohol derived from natural product, particularly, isosorbide, in a specific amount of range, and thus can be used in preparing eco-friendly polyurethane foam with simultaneously improved properties of both heat insulation properties and general physical properties including foaming state thereof, and a method for preparing the polyurethane foam by using the same and an eco-friendly polyurethane foam prepared thereby.

### BACKGROUND ART

In general, rigid polyurethane foam is lightweight and has good heat insulation properties and excellent soundproofing and molding processability, and so it is widely used in refrigerators, refrigerated containers, cooling maintenance materials for LNG ships, heat insulation materials for buildings, other insulating materials, and other decorations, etc. Rigid polyurethane foam is mainly used as heat insulation material, and when used as an interior material for buildings, high flame retardancy is required.

In order to improve the flame retardancy of rigid polyurethane foam, it is most important to use polymeric MDI as an isocyanate raw material and an aromatic ester polyol composition liquid as a polyol raw material. It is because when polymeric MDI and aromatic ester polyol react to produce polyurethane products, a rigid polyurethane foam with excellent flame retardancy can be manufactured. From this perspective, manufacturers of home appliances, ships, and building/construction materials recognize use of eco-friendly materials in manufacturing their products as one of the key performances of the products. In addition, interest in biomaterials that can reduce carbon dioxide and harmful gases is increasing and research on them is actively being conducted in preparation for carbon dioxide reduction, global warming prevention, and fossil fuel depletion. Biomaterials are known to be able to reduce the generation of carbon dioxide and volatile organic compounds, have excellent biodegradability, and reduce the use of fossil fuels.

Polyurethane is prepared by a polymerization reaction using isocyanate and polyol as main components, where the isocyanate group of the isocyanate compound reacts with the hydroxyl group of the polyol. Polyurethane foam is prepared by mixing isocyanate, polyol, water, additives, etc. at the same time and foaming, or alternatively, it is prepared by a prepolymer method where a polyol and diisocyanate are reacted to form a prepolymer, and then a catalyst, blowing agent, and additives are admixed thereto and foamed.

Representative isocyanate compounds used in the preparation of polyurethane foam include toluene diisocyanate (TDI) compounds and methylene diphenyl diisocyanate (MDI) compounds. TDI is a mixture of 2,4-TDI and 2,6-TDI isomers in a ratio of 80:20 wt%, respectively. TDI and MDI have some similar properties, and at the same time, each of them also has unique physicochemical properties. Thus, according to the intended use of polyurethane foam, TDI or MDI is selectively used, or they are mixed and used together or mixed with their derivatives. Meanwhile, due to various reasons such as the acceleration of depletion of petroleum resources, the need to reduce greenhouse gases according to climate change, the rise in raw material prices, and the increasing need for recyclable raw materials, etc., there is a demand in the urethane field for partial or complete replacement of the existing petroleum-based raw materials with environmentally friendly ingredients in the polyol field such as polyether polyol and polyester polyol manufactured from petroleum-based raw materials, and in the isocyanate field.

Korean Patent No. 10-2199919 discloses a technique for improving the air permeability and antioxidant properties of a two-component type composition for forming polyurethane foam containing a polyol component and a polyisocyanate component, by including a small amount (1 to 5 parts by weight) of anhydrosugar alcohol per 100 parts by weight of the polyol component. However, a polyurethane foam formed from such a composition needs to be further improved in various required properties, particularly in terms of heat insulation properties.

### PROBLEMS TO BE SOLVED

The present invention is intended to solve the problems of the above-mentioned prior art, and its purpose is to provide a composition for forming polyurethane foam which can be used in preparing eco-friendly polyurethane foam with excellent general physical properties including foaming state thereof and improved heat insulation properties at the same time, and a method for preparing the polyurethane foam by using the same, etc.

### TECHNICAL MEANS

In order to achieve the above-stated purpose, the present invention provides a two-component type composition for forming polyurethane foam, comprising a polyol premix composition as the first component; and polyisocyanate as the second component, wherein the polyol premix composition comprises a polyol mixture consisting of anhydrosugar alcohol and polyol other than anhydrosugar alcohol; an amine catalyst; a foam surfactant; and a foaming agent, and wherein the polyol mixture comprises the anhydrosugar alcohol in an amount of more than 5 parts by weight to less than 35 parts by weight, based on 100 parts by weight of the polyol mixture.

In an embodiment, the polyol premix composition may further comprise a flame retardant.

In other aspect, the present invention provides a method for preparing polyurethane foam, comprising mixing and reacting a polyol premix composition and polyisocyanate, wherein the polyol premix composition comprises a polyol mixture consisting of anhydrosugar alcohol and polyol other than anhydrosugar alcohol; an amine catalyst; a foam surfactant; and a foaming agent, and wherein the polyol mixture comprises the anhydrosugar alcohol in an amount of more than 5 parts by weight to less than 35 parts by weight, based on 100 parts by weight of the polyol mixture.

In an embodiment, the polyol premix composition may further comprise a flame retardant.

In another aspect, the present invention provides a polyurethane foam prepared by reacting a polyol premix composition and polyisocyanate, wherein the polyol premix composition comprises a polyol mixture consisting of anhydrosugar alcohol and polyol other than anhydrosugar alcohol; an amine catalyst; a foam surfactant; and a foaming agent, and wherein the polyol mixture comprises the anhydrosugar alcohol in an amount of more than 5 parts by weight to less than 35 parts by weight, based on 100 parts by weight of the polyol mixture.

In an embodiment, the polyol premix composition may further comprise a flame retardant.

### EFFECT OF THE INVENTION

By using the composition for forming polyurethane foam of the present invention, it is possible to prepare a polyurethane foam which has excellent general physical properties including foaming state thereof and improved heat insulation properties at the same time, and is environmentally friendly.

### CONCRETE MODE FOR CARRYING OUT THE INVENTION

The present invention is explained in more detail below.

The two-component type composition for forming polyurethane foam of the present invention comprises a polyol premix composition as the first component; and polyisocyanate as the second component.

The polyol premix composition comprises a polyol mixture consisting of anhydrosugar alcohol and polyol other than anhydrosugar alcohol, an amine catalyst, a foam surfactant and a foaming agent.

The anhydrosugar alcohol used in the present invention is prepared from hydrogenated sugar derived from natural product.

Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively).

Among them, hexitol having 6 carbon atoms includes sorbitol, mannitol, iditol, galactitol, etc. and in particular, sorbitol and mannitol are very useful materials.

Anhydrosugar alcohol is a material formed by removing one or more molecules of water from inside of the hydrogenated sugar. It has a tetraol form with four hydroxyl groups in the molecule when one molecule of water is removed, and a diol form with two hydroxyl groups in the molecule when two molecules of water are removed, and can be produced by using hexitol derived from starch.

Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash, etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for water-soluble lacquer. As such, anhydrosugar alcohol is receiving much interest because of its wide applicability, and the level of practical industrial applications thereof is increasing.

In the present invention, as the anhydrosugar alcohol, it is possible to use dianhydrohexitol which is a dehydrate of hexitol, and more preferably, one selected from isosorbide (1,4:3,6-dianhydrosorbitol), isomannide (1,4:3,6-dianhydromannitol), isoidide (1,4:3,6-dianhydroiditol), and mixture thereof, and most preferably, isosorbide.

As the polyol other than anhydrosugar alcohol, it is possible to use polyol commonly used in the preparation of polyurethane foam, having an average active hydrogen number of 3 or more (preferably 2 to 6) and an active hydrogen equivalent of 100 to 2,000.

More concretely, it is possible to use one or more selected from the group consisting of polyether polyol, polyester polyol, polymer polyol obtained by polymerizing the above polyol and vinyl compound, recycled polyol, and combination thereof. According to an embodiment, recycled polyol, polyether polyol, or polyether polymer polyol obtained by polymerizing polyether polyol and vinyl compound can be used preferably.

The polyol other than anhydrosugar alcohol may be used alone or in combination, and preferably, polymer polyol may be used to control the properties of rigid polyurethane foam. For example, polymer polyol in stable suspension form may be obtained by grafting polyvinyl filler onto polyester polyol or polyether polyol. Vinyl compounds that can be used in the preparation of polymer polyol include acrylonitrile, styrene monomer, methylmethacrylonitrile, etc. Preferably, acrylonitrile may be used alone or in a mixture with styrene monomer. The amount of vinyl compound in the polymer polyol may be 20 to 50 % by weight.

In the present invention, the polyol mixture comprises the anhydrosugar alcohol in an amount of more than 5 parts by weight to less than 35 parts by weight, based on 100 parts by weight of the polyol mixture. If the amount of the anhydrosugar alcohol in 100 parts by weight of the polyol mixture is 5 parts by weight or less, the foaming properties of polyurethane foam are relatively lowered and the insulation properties becomes poor. To the contrary, if the amount of the anhydrosugar alcohol is 35 parts by weight or more, the foam collapses during its formation and does not form into a normal foam shape.

In an embodiment, the amount of the anhydrosugar alcohol in 100 parts by weight of the polyol mixture may be more than 5 parts by weight, 5.1 parts by weight or more, 5.5 parts by weight or more, 6 parts by weight or more, 6.5 parts by weight or more, 7 parts by weight or more, 7.5 parts by weight or more, 8 parts by weight or more, 8.5 parts by weight or more, 9 parts by weight or more, 9.5 parts by weight or more, or 10 parts by weight or more, and it also may be less than 35 parts by weight, 34.9 parts by weight or less, 34.5 parts by weight or less, 34 parts by weight or less, 33.5 parts by weight or less, 33 parts by weight or less, 32.5 parts by weight or less, 32 parts by weight or less, 31.5 parts by weight or less, 31 parts by weight or less, 30.5 parts by weight or less, or 30 parts by weight or less, but it is not limited thereto.

The amine catalyst used in the present invention plays a role in promoting the reaction between the polyol and the isocyanate compound. In the present invention, the kind of amine catalyst is not especially limited, but preferably it may be a tertiary amine catalyst or a mixture of two or more thereof, and more concretely it may be selected from the group consisting of triethylene diamine, triethylamine, N-methyl morpholine, N-ethyl morpholine, and combinations thereof.

In an embodiment, the polyol premix composition may comprise the amine catalyst in an amount of 0.01 to 5 parts by weight, and more preferably 0.1 to 3 parts by weight, based on 100 parts by weight of the polyol mixture. If the amount of the amine catalyst used is too small, the reaction may be delayed, resulting in poor curing or foam collapse during formation. To the contrary, if the amount is too large, the reaction may be too fast or shrinkage may occur.

In an embodiment, the polyol premix composition may further comprise an organometallic catalyst.

When an organometallic catalyst is used in the present invention, it plays a role in promoting the reaction between the polyol and the isocyanate compound.

The organometallic catalyst usable in the present invention may be an organometallic catalyst conventionally used in the preparation of polyurethane foam, and for example, an organotin catalyst (more concretely, dibutyltin dilaurate (DBTDL) or tin bis[2-ethylhexanoate]) may be used, but it is not limited thereto.

In an embodiment, when the polyol premix composition further comprises an organometallic catalyst, the amount thereof may be 0.01 to 5 parts by weight, and more concretely 0.1 to 3 parts by weight, based on 100 parts by weight of the polyol mixture, but it is not limited thereto. If the amount of the organometallic catalyst used is too smaller than the above level, the effect of use thereof may be insufficient, and to the contrary, if the amount is too larger than the above level, the reaction may be too fast or shrinkage may occur.

The foam surfactant used in the present invention plays a role in preventing generated cells from being coalesced or broken when they are formed inside the polyurethane foam, and adjusting them so that cells having a uniform shape and size are formed. In the present invention, the kind of foam surfactant is not especially limited as long as it is conventionally used in the preparation of polyurethane foam, and for example, a silicone-based surfactant may be used generally. The silicone-based surfactant may be one or more selected from silicone oils and derivatives thereof, and concretely, it may be polyalkylene oxide methylsiloxane copolymer.

In an embodiment, the polyol premix composition may comprise the foam surfactant in an amount of 0.01 to 5 parts by weight, and more preferably 0.1 to 2.5 parts by weight, based on 100 parts by weight of the polyol mixture. If the amount of the foam surfactant used is too small, there may be a problem with uneven foam molding, and to the contrary, if the amount is too large, there may be a problem with shrinkage of the foam.

As the foaming agent used in the present invention, considering various properties of the foam required, etc., it is possible to appropriately select and use a known foaming agent ingredient that has been conventionally used for preparing rigid polyurethane foam. In the present invention, water may be representatively used as the foaming agent, and in addition, it may also be selected from the group consisting of methylene chloride, n-butane, isobutane, n-pentane, isopentane, dimethyl ether, acetone, carbon dioxide, and combination thereof. Such foaming agents may be used appropriately according to the known method of use and the required density or other characteristics of the foam.

There is no special limitation to the amount of the foaming agent used in the polyol premix composition, and for example, the foaming agent may be used in an amount of 0.1 to 40 parts by weight, and more concretely 0.5 to 35 parts by weight, based on 100 parts by weight of the polyol mixture, but it is not limited thereto. According to an embodiment of the present invention, based on 100 parts by weight of polyol, 0.8 to 5.0 parts by weight of water alone or a mixture thereof with 0.1 to 30 parts by weight of hydrofluorocarbon may be used as the foaming agent.

In an embodiment, the polyol premix composition may further comprise a flame retardant.

In an embodiment, as the flame retardant, it is possible to use phosphate-based flame retardant, phosphonate-based flame retardant, phosphinate-based flame retardant, polysiloxane-based flame retardant, phosphazene-based flame retardant, melamine-based flame retardant, or combination thereof, and more concretely phosphate-based flame retardant may be used, but it is not limited thereto.

There is no special limitation to the amount of the flame retardant used in the polyol premix composition, and for example, the flame retardant may be used in an amount of 1 to 30 parts by weight, and more concretely 5 to 25 parts by weight, based on 100 parts by weight of the polyol mixture, but it is not limited thereto.

Also in an embodiment, in addition to the above-explained ingredients, the polyol premix composition may further comprise auxiliary additives selected from the group consisting of a colorant, a UV stabilizer, a thickener, a foam stabilizer, a filler and combination thereof.

As the polyisocyanate comprised in the composition for forming polyurethane foam of the present invention, any polyisocyanate can be used without special limitation as long as it can be used in the preparation of polyurethane foam. Accordingly, for example, it is possible to use polyisocyanate selected from aliphatic polyisocyanate, cycloaliphatic polyisocyanate, araliphatic polyisocyanate, aromatic polyisocyanate, heterocyclic polyisocyanate and combination thereof, and it is also possible to use unmodified polyisocyanate or modified polyisocyanate.

Concretely, the polyisocyanate may be selected from the group consisting of methylene diisocyanate, ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-diisocyanate, cyclohexane-1,4-diisocyanate, isophorone diisocyanate, 2,4-hexahydrotoluene diisocyanate, 2,6-hexahydrotoluene diisocyanate, dicyclohexylmethane-4,4'-diisocyanate (HMDI), 1,3-phenylene diisocyanate, 1,4-phenylene diisocyanate, 2,4-toluene diisocyanate, 2,6-toluene diisocyanate, Diphenylmethane-2,4'-diisocyanate, diphenylmethane-4,4'-diisocyanate, polymeric methylene diphenyl diisocyanate (PMDI), naphthalene-1,5-diisocyanate, and combination thereof. In an embodiment, polymeric methylene diphenyl diisocyanate (PMDI) containing isomers may be used as the polyisocyanate.

In the present invention, the amount of polyisocyanate used is preferably an amount to make the isocyanate index 70 to 130, more preferably an amount to make the isocyanate index 80 to 120, and even more preferably an amount to make the isocyanate index 90 to 110. The isocyanate index is the ratio of the number of isocyanate equivalent to the number of hydroxyl group equivalent present in the polyol among the urethane reactants, and indicates the amount of isocyanate used relative to the theoretical equivalents. When the isocyanate index is less than 100, it indicates that an excess of polyol is present, and when the isocyanate index is greater than 100, it indicates that an excess of isocyanate is present. If the isocyanate index is less than 70, there is a problem in that the reactivity is lowered, and thus the gelling reaction is delayed and curing does not occur, and if the isocyanate index is greater than 130, there is a problem in that the hard segment increases excessively, and thus shrinkage phenomenon happens.

In the two-component type composition for forming polyurethane foam of the present invention, the first component and the second component may exist separately without contact, and they may be mixed immediately before use or *in situ.*

Other aspects of the present invention provide a method for preparing polyurethane foam comprising mixing and reacting a polyol premix composition and polyisocyanate, and a polyurethane foam prepared thereby, for example, a rigid polyurethane foam.

In the polyurethane foam and its preparation method of the present invention, the polyol premix composition comprises a polyol mixture consisting of anhydrosugar alcohol and polyol other than anhydrosugar alcohol; an amine catalyst; a foam surfactant; and a foaming agent, and the polyol mixture comprises the anhydrosugar alcohol in an amount of more than 5 parts by weight to less than 35 parts by weight, based on 100 parts by weight of the polyol mixture. The concrete kinds of these ingredients and amounts of use thereof are the same as explained above.

In addition, the polyol premix composition may further comprise an organometallic catalyst, a flame retardant, or combination thereof, and in addition to these, it may further comprise auxiliary additives selected from the group consisting of a colorant, a UV stabilizer, a thickener, a foam stabilizer, a filler and combination thereof.

In an embodiment, the polyurethane foam of the present invention may be prepared by adding polyisocyanate to the polyol premix composition and stirring them, and then feeding the mixture into a mold and allowing the curing and foaming to proceed.

There is no special limitation to the equipment or conditions (temperature, time, etc.) used in preparation of the polyurethane foam, and any equipment or condition conventionally employed may be used as is or with appropriate modification.

In an embodiment, the polyurethane foam may be cured at a high temperature by the heat of the urethane foaming reaction, and preferably it may be cured at a temperature of from 100 °C to 180 °C, or from 120 °C to 180 °C, more preferably from 160 °C to 180 °C, but it is not limited thereto.

The present invention is explained in more detail through the following Examples and Comparative Examples. However, the scope of the present invention is not limited thereby in any manner.

### EXAMPLES

### Examples 1 to 5 and Comparative Examples 1 to 5

According to the components and amount ratios shown in Table 1 below, isosorbide (ISB) as an anhydrosugar alcohol, a polyol other than anhydrosugar alcohol (JOP-0655), a flame retardant, a foam surfactant, a catalyst, and a foaming agent were mixed, and sufficiently mixed at a stirring speed of 3,000 rpm for 1 to 3 minutes to prepare a polyol premix composition.

To the prepared polyol premix composition, polyisocyanate was added and stirred at a stirring speed of 3,000 rpm for 7 to 10 seconds to prepare a composition for forming polyurethane foam.

A polyethylene film in square shape was laid in a square box mold of 200 mm X 200 mm X 25 mm, and the composition for forming polyurethane foam prepared above was poured thereon to prepare a polyurethane foam. At that time, the reaction initiation time (cream time), tack free time, and gel time were measured using a stopwatch and recorded, and whether the foam was formed normally was observed. In addition, the thermal conductivity (kcal/mh°C) of the manufactured 200 mm X 200 mm X 25 mm polyurethane foam was measured using a flat plate heat flow meter, and the molding density (kg/m³) was measured according to KS-M-6672. The observation and measurement results are shown in Table 1 below.

### <Used ingredients>

1) Polyol
   - JOP-0655: Polyol, 5.2-functional regenerated polyol with hydroxyl value of 420-460 mgKOH/g (Jungwoo Fine Co., Ltd., Product name: JOP-0655)
   - Isosorbide: Polyol, 2-functional bio-polyol with hydroxyl value of 767.8 mgKOH/g (Samyang Innochem Co., Ltd., Product name: NOVASORB)
2) Flame retardant
   TCPP: Phosphorus-based flame retardant, tris(1-Chloro-2-Propyl)Phosphate) (Sigma-Aldrich)
3) Foam surfactant
   B-8462: Silicone-based foam surfactant (Evonik, Product name: TEGOSTAB B-8462)
4) Catalyst
   - PC-5: Amine catalyst, pentamethyldiethylenetriamine (Sehotech Co., Ltd., Product name: ES CAT PC-5)
   - PC-8: Amine catalyst, N,N-dimethylcyclohexylamine (Sehotech Co., Ltd., Product name: ES CAT PC-8)
5) Foaming agent
   - 365/227: Physical foaming agent, a blended product of SOLKANE 365 and SOLKANE 227 (SOLVAY, Product name: SOLKANE 365/227)
   - Water
6) Isocyanate
   pMDI: Methylene diphenyl diisocyanate wherein 2,4-methylene diphenyl isocyanate and 4,4'-methylene diphenyl isocyanate monomers were mixed (BASF, product name: Lupranate MI)

**[Table 1] (Unit of the amount of ingredient: parts by weight)**

| Item | | | Examples | | | | |
|---|---|---|---|---|---|---|---|
| | | | 1 | 2 | 3 | 4 | 5 |
| Ingredient and amount | Polyol | JOP-0655 | 94 | 92 | 90 | 83 | 70 |
| | | Isosorbide | 6 | 8 | 10 | 17 | 30 |
| | Flame retardant | TCPP | 15 | 15 | 15 | 15 | 15 |
| | Foam surfactant | B-8462 | 2 | 2 | 2 | 2 | 2 |
| | Catalyst | PC-5 | 0.2 | 0.2 | 0.2 | 0.2 | 0.2 |
| | | PC-8 | 2.4 | 2.4 | 2.4 | 2.4 | 2.4 |
| | Foaming agent | Water | 1.0 | 1.0 | 1.0 | 1.0 | 1.0 |
| | | 365/227 | 30 | 30 | 30 | 30 | 30 |
| | Isocyanate | pMDI | 148.6 | 150.5 | 152.5 | 163.1 | 172.4 |
| | Isocyanate index | | 120 | 120 | 120 | 120 | 120 |
| Foam properties | Cream time (s) | | 12 | 12 | 12 | 12 | 12 |
| | Gel time (s) | | 120 | 118 | 117 | 108 | 99 |
| | Tack free time (s) | | 170 | 169 | 166 | 151 | 132 |
| | Molding density (kg/m³) | | 45 | 45 | 46 | 46 | 45 |
| | Thermal conductivity (kcal/mh°C) | | 0.01849 | 0.01839 | 0.01830 | 0.01811 | 0.01790 |

**[Table 1] (continued) (Unit of the amount of ingredient: parts by weight)**

| Item | | | Comparative Examples | | | | |
|---|---|---|---|---|---|---|---|
| | | | 1 | 2 | 3 | 4 | 5 |
| Ingredient and amount | Polyol | JOP-0655 | 99 | 98 | 96 | 100 | 65 |
| | | Isosorbide | 1 | 2 | 4 | 0 | 35 |
| | Flame retardant | TCPP | 15 | 15 | 15 | 15 | 15 |
| | Foam surfactant | B-8462 | 2 | 2 | 2 | 2 | 2 |
| | Catalyst | PC-5 | 0.2 | 0.2 | 0.2 | 0.2 | 0.2 |
| | | PC-8 | 2.4 | 2.4 | 2.4 | 2.4 | 2.4 |
| | Foaming agent | Water | 1.0 | 1.0 | 1.0 | 1.0 | 1.0 |
| | | 365/227 | 30 | 30 | 30 | 30 | 30 |
| | Isocyanate | pMDI | 143.4 | 144.6 | 146.6 | 142.7 | 142.7 |
| | Isocyanate index | | 120 | 120 | 120 | 120 | 120 |
| Foam properties | Cream time (s) | | 13 | 13 | 13 | 13 | Foam collapse occurred |
| | Gel time (s) | | 128 | 126 | 123 | 129 | |
| | Tack free time (s) | | 181 | 178 | 175 | 187 | |
| | Molding density (kg/m³) | | 46 | 45 | 46 | 46 | |
| | Thermal conductivity (kcal/mh°C) | | 0.01889 | 0.01873 | 0.01860 | 0.01915 | Not measurable |

- Cream time (seconds): This means the time taken from the mixing of the raw liquid of polyurethane foam to the beginning of the swelling of the raw liquid.
- Tack free time (seconds): This means the time taken from the beginning of the swelling of the raw liquid of polyurethane foam to the disappearance of the tackiness.
- Gel time (seconds): This means the time taken from the mixing of the raw liquid of polyurethane foam to the arrival of the raw liquid at the state of having gel strength capable of withstanding light impact and taking on a stable spatial shape, concretely meaning the time at which, when the foam is poked with a wooden chopstick, etc., at least 3 to 4 urethane fibers come out together.

As shown in Table 1 above, in Examples 1 to 5 according to the present invention, it was confirmed that the foam condition was good, and the thermal conductivity was lowered and thus the heat insulation was improved.

However, in Comparative Examples 1 to 4, the thermal conductivity was high and the heat insulation effect was poor, and in Comparative Example 5, it was confirmed that the anhydrosugar alcohol in plate shape was not completely dissolved in the polyol (JOP-0655) and thus cell crack was generated, resulting in failure in forming foam and occurrence of foam collapse.

## Claims

1. A two-component type composition for forming polyurethane foam, comprising:
a polyol premix composition as the first component; and
polyisocyanate as the second component,
wherein the polyol premix composition comprises a polyol mixture consisting of anhydrosugar alcohol and polyol other than anhydrosugar alcohol; an amine catalyst;
a foam surfactant; and a foaming agent, and
wherein the polyol mixture comprises the anhydrosugar alcohol in an amount of more than 5 parts by weight to less than 35 parts by weight, based on 100 parts by weight of the polyol mixture.

2. The two-component type composition for forming polyurethane foam of claim 1, wherein the anhydrosugar alcohol is selected from isosorbide, isomannide, isoidide and mixture thereof.

3. The two-component type composition for forming polyurethane foam of claim 1, wherein the polyol other than anhydrosugar alcohol is selected from the group consisting of polyether polyol, polyester polyol, polymer polyol obtained by polymerizing the polyether polyol or polyester polyol and vinyl compound, recycled polyol and combination thereof.

4. The two-component type composition for forming polyurethane foam of claim 1, wherein the amine catalyst is a tertiary amine catalyst.

5. The two-component type composition for forming polyurethane foam of claim 1, wherein the polyol premix composition further comprises an organometallic catalyst.

6. The two-component type composition for forming polyurethane foam of claim 1, wherein the organometallic catalyst is an organotin catalyst.

7. The two-component type composition for forming polyurethane foam of claim 1, wherein the foam surfactant is a silicone-based surfactant.

8. The two-component type composition for forming polyurethane foam of claim 1, wherein the foaming agent is selected from the group consisting of water, methylene chloride, n-butane, isobutane, n-pentane, isopentane, dimethyl ether, acetone, carbon dioxide and combination thereof.

9. The two-component type composition for forming polyurethane foam of claim 1, wherein the polyisocyanate is selected from the group consisting of methylene diisocyanate, ethylene diisocyanate, 1,4-tetramethylene diisocyanate, 1,6-hexamethylene diisocyanate, 1, 12-dodecane diisocyanate, cyclobutane-1,3-diisocyanate, cyclohexane-1,3-diisocyanate, cyclohexane-1,4-diisocyanate, isophorone diisocyanate, 2,4-hexahydrotoluene diisocyanate, 2,6-hexahydrotoluene diisocyanate, dicyclohexylmethane-4,4'-diisocyanate (HMDI), 1,3-phenylene diisocyanate, 1,4-phenylene diisocyanate, 2,4-toluene diisocyanate, 2,6-toluene diisocyanate, Diphenylmethane-2,4'-diisocyanate, diphenylmethane-4,4'-diisocyanate, polymeric methylene diphenyl diisocyanate (PMDI), naphthalene-1,5-diisocyanate and combination thereof.

10. The two-component type composition for forming polyurethane foam of any one of claims 1 to 9, wherein the polyol premix composition further comprises a flame retardant.

11. The two-component type composition for forming polyurethane foam of claim 10, wherein the polyol premix composition further comprises auxiliary additives selected from the group consisting of a colorant, a UV stabilizer, a thickener, a foam stabilizer, a filler and combination thereof.

12. A method for preparing polyurethane foam, comprising:
mixing and reacting a polyol premix composition and polyisocyanate,
wherein the polyol premix composition comprises a polyol mixture consisting of anhydrosugar alcohol and polyol other than anhydrosugar alcohol; an amine catalyst;
a foam surfactant; and a foaming agent, and
wherein the polyol mixture comprises the anhydrosugar alcohol in an amount of more than 5 parts by weight to less than 35 parts by weight, based on 100 parts by weight of the polyol mixture.

13. A polyurethane foam prepared by reacting a polyol premix composition and polyisocyanate,
wherein the polyol premix composition comprises a polyol mixture consisting of anhydrosugar alcohol and polyol other than anhydrosugar alcohol; an amine catalyst; a foam surfactant; and a foaming agent, and
wherein the polyol mixture comprises the anhydrosugar alcohol in an amount of more than 5 parts by weight to less than 35 parts by weight, based on 100 parts by weight of the polyol mixture.
